# EUROPEAN PATENT APPLICATION

(11) **EP 4 297 201 A1**
(43) Date of publication of application: **27.12.2023**
(21) Application number: 20199061.1
(22) Date of filing: 29.09.2020
(51) Int. Cl.: H01R 25/14, A47B 57/30, H01R 25/16, A47F 5/08, A47F 11/10, H01R 41/00, H02G 11/00, F21W 131/301

(54) **POWER SUPPLY DEVICE FOR DISPLAY**

(30) Priority: 22.10.2019 CN 201911003130
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Liu, Xiaoyun, Ningbo 315103 (CN); Xu, Kai, Ningbo 315103 (CN); Dong, Jianguo, Ningbo 315103 (CN); Chen, Dong, Ningbo 315103 (CN)
(74) Representative: 2K Patentanwälte Blasberg Kewitz & Reichel

(57) **Abstract**

The invention discloses a power supply device for display comprising a strip-shaped power supply cavity, a fixed power supply terminal, a flexible conductive strip, and a power taking head. The power taking head comprises a power taking part located in the strip-shaped power supply cavity for connecting with the other end of the flexible conductive strip and a output part located outside the strip-shaped power supply cavity, and the flexible conductive strip is stretched or bent when the power taking head is away from or close to the fixed power supply terminal. The power supply device for display of the present invention has the advantages of simple structure, convenient assembly and use, small volume, waterproof, low manufacturing cost and the like.

## Description

### RELATED APPLICATION

This application claims priority to a Chinese Patent Application No. CN 201911003130.X, filed on October 22, 2019.

### FIELD OF THE TECHNOLOGY

The present invention relates to the field of power supply technology, with particular emphasis on a power supply device for display.

### BACKGROUND OF THE INVENTION

Displays are usually realized through shelves or showcases, and often need to use electrical equipment, such as LED lighting. LED lighting needs to be powered through wires, generally each wire is equipped with a lamp for power supply, which will cause too many wires in the entire shelf, and it brings inconvenience to installation and increases installation costs. The shelf layer has the function of up and down adjustment. When the shelf is placed with different products, the height of the shelf layer needs to be adjusted up or down, and the fixed-length wire cannot make the layer board convenient to move. The wires must be removed and then reinstalled at the new height of the laminate. In addition, the exposed wires will affect the appearance and increase safety risks.

In the prior art, in order to solve the above-mentioned problems, some power supply rails and power taking heads provided thereon are proposed to achieve the power supply requirement. However, the conductive strips on the power supply rails are usually exposed and are not suitable for applications requiring waterproofing.

### BRIEF SUMMARY OF THE INVENTION

In view of this, the present invention provides a power supply device for display to solve the above technical problems.

A power supply device for display comprises:
a strip-shaped power supply cavity, surrounded by side plates and provided with a strip-shaped hole extending along its length;
a fixed power supply terminal, arranged in the strip-shaped power supply cavity;
a flexible conductive strip, arranged in the strip-shaped power supply cavity and one end is connected to the fixed power supply terminal;
a power taking head, positioned and slidably arranged on the strip-shaped hole, and comprising a power taking part located in the strip-shaped power supply cavity for connecting with the other end of the flexible conductive strip and a output part located outside the strip-shaped power supply cavity, and the flexible conductive strip is stretched or bent when the power taking head is away from or close to the fixed power supply terminal.

Advantageously, the fixed power supply terminal is divided into two groups, positive fixed power supply terminal and negative fixed power supply terminal; and the two fixed power supply terminals are respectively arranged on two opposite sides of the strip-shaped power supply cavity in the vertical length direction.
correspondingly, the flexible conductive strip is divided into two, a positive flexible conductive strip and a negative flexible conductive strip, which are respectively connected to the corresponding fixed power supply terminal, and the other end of the two flexible conductive strips are connected to the same power taking head.

Advantageously, a projection of the power taking head on the cross section of the strip power supply cavity along the length direction of the strip power supply cavity is located between the positive and negative fixed power supply terminals.

Advantageously, the fixed power supply terminal comprises:
a power supply conductive strip, passing through the strip-shaped power supply cavity and fixed at both ends;
a power supply block, fixedly connected to the power supply conductive strip and connected to the flexible conductive strip.

Advantageously, the power supply conductive strip adopts insulated wires.

Advantageously, the strip-shaped power supply cavity is a flattened rectangle structure with a certain width and height, and the strip-shaped power supply cavity is surrounded by four side plates, a front cover, a left side baffle plate, a rear cover, and a right side baffle plate.

Advantageously, the front cover, the left side baffle plate, the rear cover and the right side baffle plate are integrally formed and manufactured.

Advantageously, there are two fixed power supply terminals, one of which is arranged on the inner side of the right side baffle plate, and the other is arranged on the inner side of the left side baffle plate.

Advantageously, ribs are respectively provided at the corresponding positions of the inner sides of the front cover and the rear cover close to the left side baffle plate and the right side baffle plate respectively, and are arranged to limit the power supply block.

Advantageously, two power supply conductive strips are respectively arranged between the left side baffle plate and the rib and between the right side baffle plate and the rib.

Advantageously, the strip hole is provided on the front cover.

Advantageously, the power taking part expands to both sides in the width direction of the strip-shaped power supply cavity to form a slider.

Advantageously, the power taking part adopts plastic with Rockwell hardness of 50-90, and a unilateral assembly gap between the power taking head and front cover and the power taking head and the rear cover is 0.20mm-0.30mm, so as to form positioning damping with the strip-shaped power supply cavity.

Advantageously, the height of the strip-shaped power supply cavity is H, and the diameter of the flexible conductive strip is D, D<H <2D.

Advantageously, the flexible conductive strip is an insulated wire.

Advantageously, the power taking portion of the power taking head has an rigid hollow rod outward extension along the length direction of the strip-shaped power supply cavity and sleeved outside the flexible conductive strip.

Advantageously, in the length direction of the strip-shaped power supply cavity, two flexible conductive strips are respectively located on both sides of the power taking head.

Advantageously, in the length direction of the strip-shaped power supply cavity, two flexible conductive strips are located on the same side of the power taking head.

Advantageously, a middle baffle plate separating two flexible conductive strips is provided in the strip-shaped power supply cavity.

Advantageously, the middle baffle plate is formed by folding two long sides of the strip hole downward and inward, and the power taking head is provided with a groove that avoids the middle baffle plate.

Advantageously, sealing strips close to each other or overlapping are provided on two long sides of the strip-shaped hole.

Advantageously, there are at least two groups of matched fixed power supply terminals, flexible conductive strips, and power taking heads, which are distributed along the length direction of the strip-shaped power supply cavity.

Advantageously, the output part is connected with a plug or a socket.

Advantageously, a magnetic member for fixing is provided on the outside of the strip-shaped power supply cavity.

Technical effects of the invention:

The power supply device for display of the present invention has the advantages of simple structure, convenient assembly and use, small volume, waterproof, low manufacturing cost and the like.

### BRIEF DESCRIPTION OF THE DRAWINGS

The following describes embodiments of the present invention with reference to the accompanying drawings, in which:
FIG. 1 is a schematic diagram of the structure of the power supply device for display in the first embodiment.
FIG.2 is a schematic diagram of the structure of the power supply device for display in embodiment 1 (with the strip-shaped power supply cavity removed).
FIG. 3 is an enlarged schematic diagram of part A in FIG. 2.
FIG. 4 is a schematic view of FIG. 3 from another angle.
FIG. 5 is a schematic cross-sectional view of the power supply device for display in the first embodiment at the power taking head.
FIG. 6 is a schematic diagram of the structure of a part of the power supply device for display in the second embodiment.
FIG. 7 is a schematic cross-sectional view of the power supply device for display in the third embodiment at the power-taking head.

### DETAILED DESCRIPTION OF THE INVENTION

Hereinafter, specific embodiments of the present invention will be described in further detail based on the drawings. It should be understood that the description of the embodiments of the present invention is not intended to limit the protection scope of the present invention.

### Embodiment 1

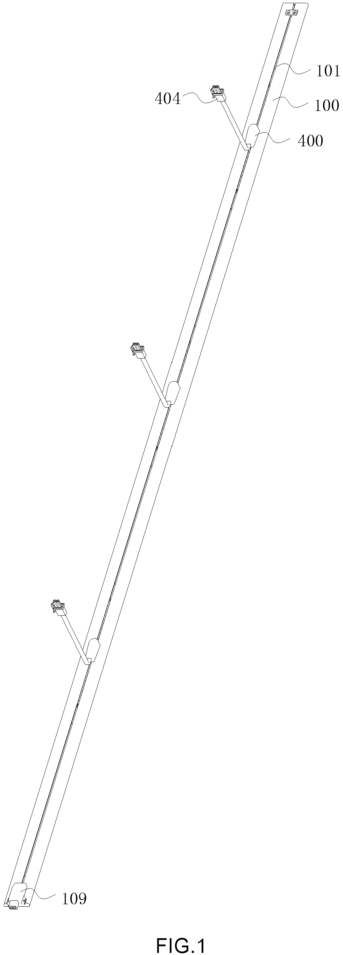

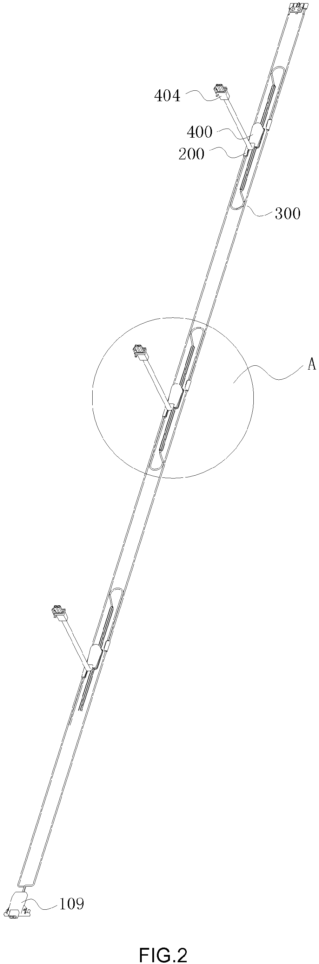

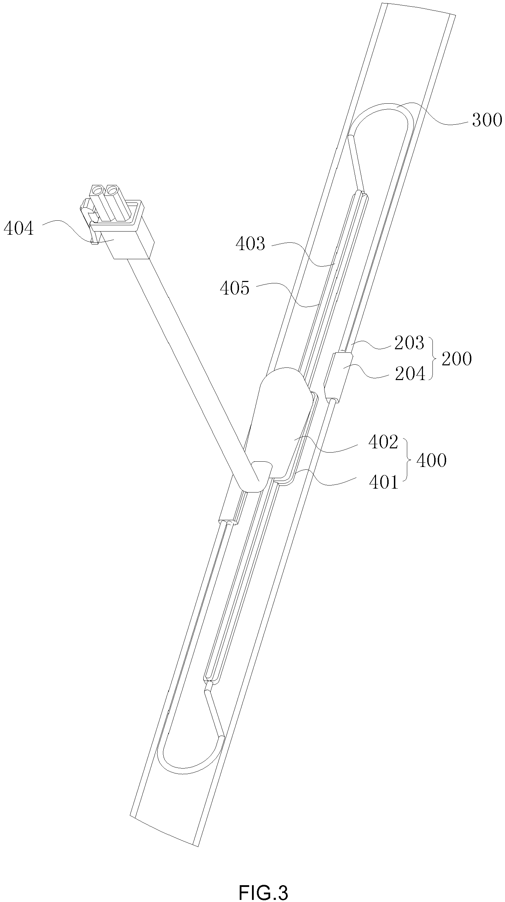

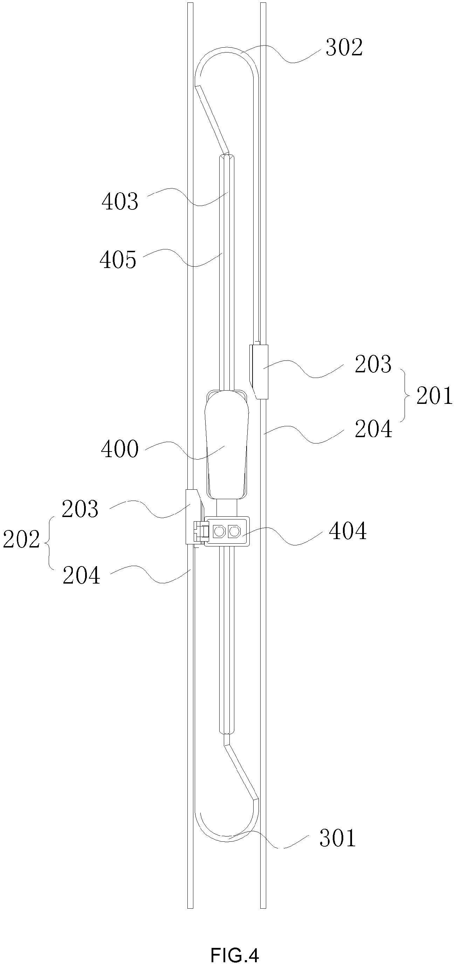

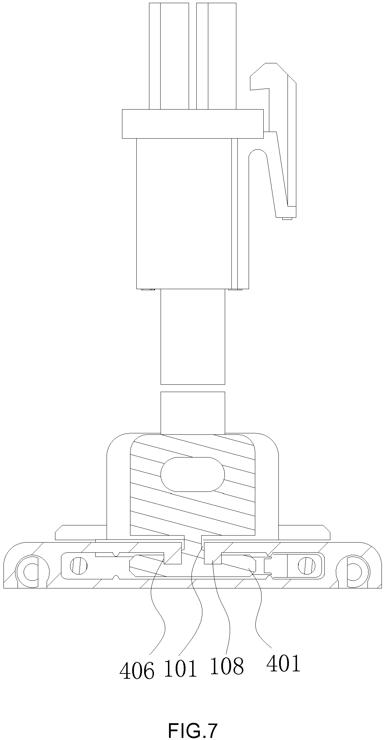

As shown in FIGS. 1 to 5, the power supply device for display in this embodiment includes a strip-shaped power supply cavity 100, a fixed power supply terminal 200, a flexible conductive strip 300, and a power taking head 400. The strip-shaped power supply cavity 100 is provided with a strip-shaped hole 101 extending along its length; the fixed power supply terminal 200 is provided in the strip-shaped power supply cavity 100; the flexible conductive strip 300 is provided in the strip-shaped power supply cavity 100 and with one end is connected to the fixed power supply terminal 200; the power taking head 400 is positioned and slidably arranged on the strip-shaped hole 101. The power taking head 400 includes a power taking part 401 located in the strip-shaped power supply cavity 100 for connecting to the other end of the flexible conductive strip 300 and a output part 402 located outside the strip-shaped power supply cavity 100, The flexible conductive strip 300 stretches or bends when the power taking head 400 is away from or close to the fixed power supply terminal 200. In order to facilitate power supply, the output part 402 is connected with a plug 404 with a wire.

The length and direction of the strip-shaped power supply cavity 100 are set according to the power supply requirements. The strip-shaped power supply cavity 100 can be straight or curved, and is surrounded by side plates. The side plates can be integral or spliced together. In order to achieve power supply, the strip-shaped power supply cavity 100 is provided with a fixed power supply terminal 200 inside. The fixed power supply terminal 200 can be directly inserted and fixed laterally from the side plate of the strip-shaped power supply cavity 100, and then externally connected to the main power supply device; or a power supply bus can be set to pass through the strip-shaped power supply cavity 100, a power supply block 204 is arranged on the power supply bus, and then the power supply bus is fixed to realize the positioning of the fixed power supply terminal 200 in the strip-shaped power supply cavity 100. In this embodiment, the fixed power supply terminal 200 includes a power supply conductive strip 203 (that is, a power supply bus) and a power supply block 204. The power supply conductive strip 203 passes through the strip-shaped power supply cavity 100 and is fixed at both ends; the power supply block 204 is fixedly connected to the power supply conductive strip 203 and is connected to the flexible conductive strip 300. In order to facilitate the acquisition of materials and reduce costs, in this embodiment, the power supply conductive strip 203 adopts insulated wires. The power supply conductive strip 203 is used to connect to the power supply bus. For convenience, a connector clip is generally provided at one end to connect with the external power supply bus. Of course, welding can also be used to achieve electrical connection. In this embodiment, the strip-shaped power supply cavity 100 is provided with a power supply socket 109 at one end.

The cross-sectional shape of the strip-shaped power supply cavity 100 can be designed according to the installation position, and limited by side plates. When it is applied to common display equipment such as shelves, the surface mount installation method is generally adopted to reduce the volume and reduce the required installation space. In this embodiment, the strip-shaped power supply cavity 100 is a flattened rectangle structure with a certain width and height. The strip-shaped power supply cavity 100 is surrounded by four side plates, a front cover 102, a left side baffle plate 103, a rear cover 104, and a right side baffle plate 105. The front cover 102, the left side baffle plate 103, the rear cover 104, and the right side baffle plate 105 can be manufactured in the form of fastener connection, glue bonding or snap connection or the like. For ease of manufacture, in this embodiment, the front cover 102. The left side baffle plate 103, the rear cover 104, and the right side baffle plate 105 are integrally formed and manufactured. The manufacturing process can be realized by extrusion molding. The material can be general plastic. In this embodiment, PVC is used.

The flexible conductive strip 300 is used to transfer the current from the fixed power supply terminal 200 to the sliding power taking head 400. The power taking head 400 slides to achieve taking electricity in different positions, thus it can be applied to different shelves or changeable shelf positions, so it can solve the problem that there are many and messy wires in the prior art, and it is difficult to change the line.

The flexible conductive strip 300 can be one or two, which can be set according to needs. The power transmission generally includes positive and negative electrodes. When a flexible conductive strip 300 is set, the positive and negative wires can be combined into one wire, namely for ordinary wires. If the positive and negative wires are separated, two fixed power supply terminals 200 and two flexible conductive strips 300 are required to cooperate, and the two flexible conductive strips 300 are connected to the same power taking head 400 to complete a set of power transmission. Ordinary wires wrap the positive and negative wires together. They have a large diameter and poor flexibility. They have limited deformability during bending. When the cross-sectional area of the strip-shaped power supply cavity 100 is not large, in order to make the power taking head move more flexibly and the flexible conductive strip 300 more flexible, in this embodiment, the positive and negative wires are separated, and the fixed power supply terminal 200 is divided into two groups, positive and negative, that is, the positive fixed power supply terminal 201 and the negative fixed power supply terminal 202 are respectively arranged on the two opposite sides of the strip-shaped power supply cavity 100 in the vertical length direction (the length direction of the strip-shaped power supply cavity 100); correspondingly, the flexible conductive strip 300 is divided into two, positive and negative, a positive flexible conductive strip 301 and a negative flexible conductive strip 302, respectively connected to the positive fixed power supply terminal 201 and the negative fixed power supply terminal 202, and the other ends of the two flexible conductive strips are connected to the same power taking head 400. Through the power supply socket 109, external electricity is input to the positive fixed power supply terminal 201 and the negative fixed power supply terminal 202.

In this embodiment, the projection of the power taking head 400 on the cross section of the strip-shaped power supply cavity 100 along the length direction of the strip-shaped power supply cavity 100 is located between the positive and negative fixed power supply terminals. Therefore, the positive flexible conductive strips 301 and the negative flexible conductive strips 302 can be arranged on both sides of the power taking head 400, so that the conductive strips are not easily wound and overlapped. In this embodiment, there are two fixed power supply terminals 200, one of which is arranged on the inner side of the right side baffle plate 105, and the other is arranged on the inner side of the left side baffle plate 103.

In order to facilitate the positioning the fixed power supply terminal 200, in this embodiment, ribs 106 arranged to limit the power supply block 204are respectively provided at the positions of the inner side of the front cover 102 and the rear cover 104 close to the left side baffle plate 103 and the right side baffle plate 105. When the power supply conductive strip 203 passes through the strip-shaped power supply cavity 100 and is fixed at its two ends, it can be fixed along the length direction of the strip-shaped power supply cavity 100. On a plane perpendicular to the length direction of the strip-shaped power supply cavity 100, the front cover 102, the rear cover 104, the left side baffle plate 103, and the right side baffle plate 105 are combined with the rib 106 to limit the power supply block 204. The power supply conductive strips 203 are respectively arranged between the left side baffle plate 103 and the rib 106 and between the right side baffle plate 105 and the rib 106.

In this embodiment, the strip-shaped hole 101 is provided on the front cover 102. The strip-shaped hole 101 can be set according to the stroke of the power taking head 400. For the convenience of assembly, both ends of the strip-shaped hole 101 can be opened. In this embodiment, the upper and lower ends of the strip-shaped hole 101 on the front cover 102 are opened, so that the power taking head 400 can be inserted into the strip-shaped hole 101 from one end.

The positionable and slidable arrangement of the power taking head 400 on the strip-shaped hole 101 means that the power taking head 400 can slide along the strip-shaped hole 101, and can be positioned when a fixed position is required while being movable. In order to improve the smoothness of the movement, the power taking part 401 expands to both sides in the width direction of the strip-shaped power supply cavity 100 to form a slider. There are many ways to achieve positioning, which can be achieved by detachable and loose locking parts, such as locks, locking screws, etc. In this embodiment, the positioning is achieved by friction damping, and the power taking part 401 adopts plastic with Rockwell hardness of 50 ~90mm, and the unilateral assembly gap between the power taking head 400 and front cover 102 and the power taking head 400 and the rear cover 104 is 0.20mm-0.30mm, so as to form positioning damping with the strip-shaped power supply cavity 100, thereby reducing accessories, making installation and use more convenient.

In order to further prevent the flexible conductive strip 300 from being wound and overlapping, the height of the strip-shaped power supply cavity 100 is H, and the diameter of the flexible conductive strip 300 is D, D<H<2D. Thus, the flexible conductive strip 300 is bent and folded in a single plane, avoiding entanglement. In order to facilitate material acquisition, the flexible conductive strip 300 uses insulated wires. The encapsulation outside the insulated wire has a certain waterproof structure, is convenient to obtain materials, and has low manufacturing cost. And when the diameter of the flexible conductive strip 300 is small, the height of the entire strip-shaped power supply cavity 100 can also be set to be small, as long as the thickness of the side plate forming the strip-shaped power supply cavity 100 is set to be thinner. In this embodiment, That is, the thickness of the front cover 102 and the rear cover 104 is set to be small, which can be set as required.

When the flexible conductive strip 300 and the power supply conductive strip 203 both use insulated wires, the power supply device of this embodiment has a good waterproof effect.

In order to minimize the folding of the flexible conductive strip 300, in this embodiment, the power taking part 401 of the power taking head 400 has an rigid hollow rod 403 outward extension along the length direction of the strip-shaped power supply cavity 100 and sleeved outside the flexible conductive strip 300. The rigid hollow rod 403 can keep the flexible conductive strip 300 inside it straight, reducing the possibility of folding. In order to keep the rigid hollow rod 403 straight, the outer surface of the rigid hollow rod 403 is provided with a convex strip 405 embedded in the strip-shaped hole 101.

In order to further reduce folding and entanglement, and to increase the activity space for each flexible conductive strip 300, in this embodiment, in the length direction of the strip-shaped power supply cavity 100, two flexible conductive strips 300 are respectively located on both sides of the power taking head 400. Thus, the flexible conductive strip 300 is bent and folded in different spaces without affecting each other.

When the power supply conductive strip adopts a wire to wrap the positive and negative wires at the same time, only a single-sided power supply conductive strip 203 and flexible conductive strip 300 need to be provided to achieve the desired function of the present invention, but the thickness of the device will increase and the flexibility will decrease.

The bending method of the flexible conductive strip 300 in the strip-shaped power supply cavity 100 can also be controlled. In this embodiment, the flexible conductive strip 300 drawn from the power supply block 204 is first abutted against the power supply conductive strip 203 and then bent in the opposite direction to abut against another group of power supply conductive strips 203, and then connected to the power taking head 400. The above arrangement can make the flexible conductive strip 300 bend only one section, thereby reducing bending and increasing the service life.

In order to facilitate installation, a magnetic member for fixing is provided on the outside of the strip-shaped power supply cavity 100. In this embodiment, the magnetic member is a cylindrical magnet 500, and a magnet installation slot is provided on the rear cover 104 for fixed installation.

For aesthetic reasons, sealing strips close to or overlapping can also be fixed on the two long sides of the strip-shaped hole 101. The power taking head 400 supports the sealing strips on both sides, so that the movement and changes of the wires in the strip-shaped power supply cavity 100 can be covered and dust can be prevented.

Generally, there are multiple layers for display. For example, the shelves are provided with multiple layers of laminates. In order to provide power supply as a whole, a plurality of power taking heads 400 can be provided in a strip-shaped power supply cavity 100 to supply power to each layer of laminates. In this embodiment, there are three sets of matched fixed power supply terminals 200, flexible conductive strips 300, and power taking heads 400, which are distributed along the length direction of the strip-shaped power supply cavity 100. External power is input to multiple sets of positive fixed power supply terminals 201 and negative fixed power supply terminals 202 through the power supply socket 109. It can be seen that it needs to span each layer during installation, and the gap between the laminate and the backplane is small. Therefore, the height of the strip-shaped power supply cavity 100 needs to be made into a thinner form to pass through the gap.

### Embodiment 2

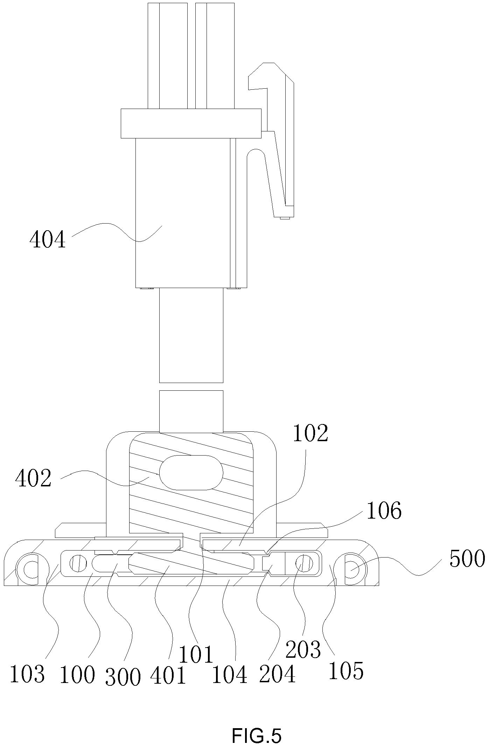

As shown in FIG. 6, in this embodiment, except that two flexible conductive strips 300 are arranged on the same side, the remaining structure is the same as that of embodiment 1.

When two flexible conductive strips 300 are located on the same side of the power taking head 400 in the length direction of the strip-shaped power supply cavity 100, the positive flexible conductive strip 301 and the negative flexible conductive strip 302 are led out from the positive fixed power supply terminal 201 and the negative fixed power supply terminals 202, and then close to each other and connected to the power taking head 400.

### Embodiment 3

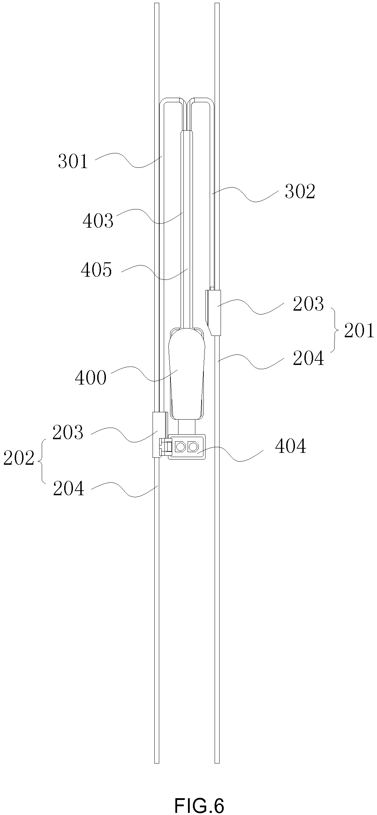

As shown in FIG. 7, in this embodiment, except that a middle baffle plate 108 separating two flexible conductive strips 300 is provided in the strip-shaped power supply cavity 100, the rest of the structure is the same as that of the embodiment 2.

The middle baffle plate 108 is formed by folding two long sides of the strip-shaped hole 101 downward and inward, and the power taking head 400 is provided with a groove 406 that avoids the middle baffle plate 108.

The above disclosure has been described by way of example and in terms of exemplary embodiment, and it is to be understood that the disclosure is not limited thereto. Rather, any modifications, equivalent alternatives or improvement etc. within the spirit of the invention are encompassed within the scope of the invention as set forth in the appended claims.

## Claims

1. A power supply device for display, **characterized in that** it comprises:
a strip-shaped power supply cavity (100), surrounded by side plates and provided with a strip-shaped hole (101) extending along its length;
a fixed power supply terminal (200), arranged in the strip-shaped power supply cavity (100);
a flexible conductive strip (300), arranged in the strip-shaped power supply cavity (100) and
one end is connected to the fixed power supply terminal (200);
a power taking head (400), positioned and slidably arranged on the strip-shaped hole (101), and comprising a power taking part (401) located in the strip-shaped power supply cavity (100) for connecting with the other end of the flexible conductive strip (300) and a output part (402) located outside the strip-shaped power supply cavity (100), and the flexible conductive strip (300) is stretched or bent when the power taking head (400) is away from or close to the fixed power supply terminal (200).

2. The power supply device for display as claimed in claim 1, wherein the fixed power supply terminal (200) is divided into two groups, positive fixed power supply terminal (201) and negative fixed power supply terminal (202); correspondingly, the flexible conductive strip ( 300) is divided into two, a positive flexible conductive strip (301) and a negative flexible conductive strip (302),which are respectively connected to the corresponding fixed power supply terminal (200), and the other end of the two flexible conductive strips (300) are connected to the same power taking head (400).

3. The power supply device for display as claimed in claim 1, wherein two fixed power supply terminals (200) are respectively arranged on two opposite sides of the strip-shaped power supply cavity (100) in the vertical length direction.

4. The power supply device for display as claimed in claim 3, wherein a projection of the power taking head (400) on the cross section of the strip-shaped power supply cavity (100) along the length direction of the strip-shaped power supply cavity (100) is located between the positive and negative fixed power supply terminals.

5. The power supply device for display as claimed in any of the claims 1 to 4, wherein the fixed power supply terminal (200) comprises:
a power supply conductive strip (203), passing through the strip-shaped power supply cavity (100) and fixed at both ends;
a power supply block (204), fixedly connected to the power supply conductive strip (203) and connected to the flexible conductive strip (300)

6. The power supply device for display as claimed in claim 5, wherein the power supply conductive strip (203) adopts insulated wires.

7. The power supply device for display as claimed in any of the claims 1 to 6, wherein the strip-shaped power supply cavity (100) is a flattened rectangle structure with a certain width and height, and the strip-shaped power supply cavity (100) is surrounand 8ded by four side plates, a front cover (102), a left side baffle plate (103), a rear cover (104), and a right side baffle plate (105).

8. The power supply device for display as claimed in claim 7 wherein the front cover (102), the left side baffle plate (103), the rear cover (104) and the right side baffle plate (105) are integrally formed and manufactured.

9. The power supply device for display as claimed in claim 7, wherein there are two fixed power supply terminals (200), one of which is arranged on the inner side of the right side baffle plate (105), and the other is arranged on the inner side of the left side baffle plate (103).

10. The power supply device for display as claimed in claim 7, wherein ribs (106) are respectively provided at the corresponding positions of the inner sides of the front cover (102) and the rear cover (104) close to the left side baffle plate (103) and the right side baffle plate (105) respectively, and are arranged to limit the power supply block (204).

11. The power supply device for display as claimed in claim 10, wherein two power supply conductive strips (203) are respectively arranged between the left side baffle plate (103) and the rib (106) and between the right side baffle plate (105) and the rib (106).

12. The power supply device for display as claimed in claim 7, wherein the strip-shaped hole (101) is provided on the front cover (102).

13. The power supply device for display as claimed in claim 7, wherein the power taking part (401) expands to both sides in the width direction of the strip-shaped power supply cavity (100) to form a slider.

14. The power supply device for display as claimed in claim 13, wherein the power taking part (401) adopts plastic with Rockwell hardness of 50-90, and a unilateral assembly gap between the power taking head (400) and front cover (102) and the power taking head (400) and the rear cover (104) is 0.20mm-0.30mm, so as to form positioning damping with the strip-shaped power supply cavity (100).

15. The power supply device for display as claimed in claim 7, wherein the height of the strip-shaped power supply cavity (100) is H, and the diameter of the flexible conductive strip (300) is D, D<H <2D.

16. The power supply device for display as claimed in any one of claims 1-15, wherein the flexible conductive strip (300) is an insulated wire.

17. The power supply device for display as claimed in any one of claims 1-15, wherein the power taking part (401) of the power taking head (400) has a rigid hollow rod (403) outward extension along the length direction of the strip-shaped power supply cavity (100) and sleeved outside the flexible conductive strip (300).

18. The power supply device for display as claimed in any one of claims 2-15, wherein in the length direction of the strip-shaped power supply cavity (100), two flexible conductive strips (300) are respectively located on both sides of the power taking head (400).

19. The power supply device for display as claimed in any one of claims 2-15, wherein in the length direction of the strip-shaped power supply cavity (100), two flexible conductive strips (300) are located on the same side of the power taking head (400).

20. The power supply device for display as claimed in claim 19, wherein a middle baffle plate (108) separating two flexible conductive strips (300) is provided in the strip-shaped power supply cavity (100).

21. The power supply device for display as claimed in claim 20, wherein the middle baffle plate (108) is formed by folding two long sides of the strip-shaped hole (101) downward and inward, and the power taking head (400) is provided with a groove (406) that avoids the middle baffle plate (108).

22. The power supply device for display as claimed in any one of claims 1-15, wherein sealing strips close to each other or overlapping are provided on two long sides of the strip-shaped hole (101).

23. The power supply device for display as claimed in any one of claims 1-15, wherein there are at least two groups of matched fixed power supply terminals (200), flexible conductive strips (300), and power taking heads (400), which are distributed along the length direction of the strip-shaped power supply cavity (100).

24. The power supply device for display as claimed in any one of claims 1-15, wherein the output part (402) is connected with a plug (404) or a socket.

25. The power supply device for display as claimed in any one of claims 1-15, wherein a magnetic member for fixing is provided on the outside of the strip-shaped power supply cavity (100).
